Europäisches Patentamt

European Patent Office

Office européen des brevets

(19)

(11) Veröffentlichungsnummer: **0 304 651 B1**

# (12) EUROPÄISCHE PATENTSCHRIFT

(45) Veröffentlichungstag der Patentschrift: **15.04.92**

(51) Int. Cl.⁵: **F16C 3/06**

(21) Anmeldenummer: **88112043.0**

(22) Anmeldetag: **26.07.88**

(54) **Kurbeltrieb einer Brennkraftmaschine der V-Bauart.**

(30) Priorität: **22.08.87 DE 3728013**

(43) Veröffentlichungstag der Anmeldung:
**01.03.89 Patentblatt 89/09**

(45) Bekanntmachung des Hinweises auf die
Patenterteilung:
**15.04.92 Patentblatt 92/16**

(84) Benannte Vertragsstaaten:
**DE ES FR GB IT SE**

(56) Entgegenhaltungen:
**DE-A- 2 209 945**
**DE-A- 3 541 903**

PATENT ABSTRACTS OF JAPAN, unexamined applications, Sektion M, Band 7, Nr. 110
(M-214), 13. Mai 1983 THE PATENT OFFICE
JAPANESE GOVERNMENT Seite 60 M 214

PATENT ABSTRACTS OF JAPAN, unexamined applications, Sektion M, Band 11, Nr. 128
(M-583), 22. April 1987 THE PATENT OFFICE
JAPANESE GOVERNMENT Seite 160 M 583

PATENT ABSTRACTS OF JAPAN, unexamined applications, Sektion M, Band 8, Nr. 177
(M-317), 15. August 1984 THE PATENT OFFI-

CE JAPANESE GOVERNMENT Seite 73 M 317

(73) Patentinhaber: **Daimler-Benz Aktiengesellschaft**
**Postfach 600202 Mercedesstrasse 136**
**W-7000 Stuttgart 60(DE)**

(72) Erfinder: **Werner, Johannes**
**Schwalbenweg 28**
**W-7050 Waiblingen(DE)**
Erfinder: **Kerschbaum, Walter**
**Lange Furche 37**
**W-7012 Fellbach(DE)**
Erfinder: **Heinrich, Rolf**
**Schumannstrasse 8**
**W-7056 Weinstadt 1(DE)**
Erfinder: **Körner, Wolf-Dietrich, Prof.**
**Lindenstr. 36**
**W-7148 Remseck 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 304 651 B1

## Beschreibung

Die Erfindung betrifft einen Kurbeltrieb einer Brennkraftmaschine der V-Bauart gemäß Oberbegriff des Hauptanspruches.

Bei einem in der DE-OS 35 41 903 aufgezeigten Kurbeltrieb werden durch die Verwendung einer Zwischenwange zwischen den versetzten Hubzapfen die fertigungstechnisch nicht unproblematischen Radienverschneidungen sowie die dabei auftretenden hohen Kerbspannungen vermieden.

Der Erfindung liegt nun die Aufgabe zugrunde, einen Kurbeltrieb der im Oberbegriff des Hauptanspruches beschriebenen Art zu schaffen, bei dem sowohl der erforderliche Bearbeitungsaufwand an der Zwischenwange selbst minimal gehalten ist als auch in jeder Kurbelstellung eine optimale Axialführung der beiden Pleuel gewährleistet ist.

Die Aufgabe wird erfindungsgemäß durch die Merkmale des kennzeichnenden Teiles des Hauptanspruches gelöst.

Durch die erfindungsgemäße Ausgestaltung des Kurbeltriebes kann die am pleuelschaftseitigen Teil eines jeden großen Pleuelauges angeordnete Axialanlauffläche in keiner Kurbelstellung über die Projektionskontur der Zwischenwange hinausreichen, so daß die Pleuelaugen immer über eine maximale Anlagefläche gegen die Zwischenwange anlaufen.

Darüber hinaus bleibt bei dem Kurbeltrieb die Feinbearbeitung der Zwischenwange nur noch auf ein Planschleifen der beiden erfindungsgemäßen Axialanlaufbünde beschränkt. Der erfindungsgemäße Kurbeltrieb ermöglicht generell die Verwendung von Pleueln, deren Lagerdeckel an der Axialführung der Pleuel nicht teilhaben. Ein Massenzuwachs des Kurbeltriebes durch die Zwischenwange ist somit durch eine Reduzierung der Lagerdeckelbreite gemäß Anspruch 2 zu kompensieren.

Um eine Verbesserung der Tragfähigkeit der Pleuellager zu erzielen, werden diese in Richtung der Zwischenwange verbreitert. Dies ist dadurch möglich, daß die zwischenwangenseitigen Hubzapfenübergangsradien kleiner ausgebildet sind als die kurbelwangenseitigen Radien. Einerseits entspricht dies der Beanspruchungsverteilung längs der Kröpfungsanordnung, bei der aufgrund der Formfaktoren Maximalspannungen im Bereich der Grundzapfenhohlkehlen auftreten. Andererseits wird die Tragsicherheit der Kurbelwelle im zwischenwangennahen Bereich dadurch verbessert, daß die kleineren und dadurch kerbwirkungsempfindlicheren Übergangsradien zur Zwischenwange trotzderen Schmalheit einer umlaufenden Radienhärtung mit geringer Einhärtetiefe unterzogen werden. Diese ist so ausgeführt, daß beide Härtezonen rechts- und linksseitig der Zwischenwange einander nicht schneiden, sondern im Überdeckungsquerschnitt der Hubzapfen eine weiche Zone verbleibt. Die durch die geringe Breite der Zwischenwange niedrigere Einhärtetiefe der zwischenwangenseitigen Übergangsradien gegenüber den Grundwangenradien läßt einen gleichmäßigen Übergang des Härteverlaufs längs der Zapfenlänge sinnvoll erscheinen. Eine zusätzliche Sicherheit gegen Umfangshärterisse in der Zwischenwange im Übergang von den gehärteten zu den nicht gehärteten Bereichen ist durch eine Ausgestaltung nach Anspruch 6 erzielbar.

Weitere vorteilhafte Ausgestaltungen der Erfindung sind den übrigen Unteransprüchen zu entnehmen.

In der Zeichnung ist bei Ausführungsbeispiel eines erfindungsgemäßen Kurbeltriebes dargestellt.

In einzelnen zeigt

Figur 1    einen erfindungsgemäßen Kurbeltrieb in einer ausschnittsweisen Darstellung,

Figur 2    eine längs der Linie II-II geschnittene Darstellung der Fig. 1,

Figur 3    die Härtebereiche des erfindungsgemäßen Kurbeltriebes der Figur 1,

Figur 4    eine Draufsicht auf den längs der Linie IV-IV geschnittenen Kurbeltrieb der Figur 3,

Figur 5    die Härtebereiche des nach einer weiteren Variante gehärteten Kurbeltriebes der Figur 3 und

Figur 6    eine Draufsicht auf den längs der Linie VI-VI geschnittenen Kurbeltrieb der Figur 5.

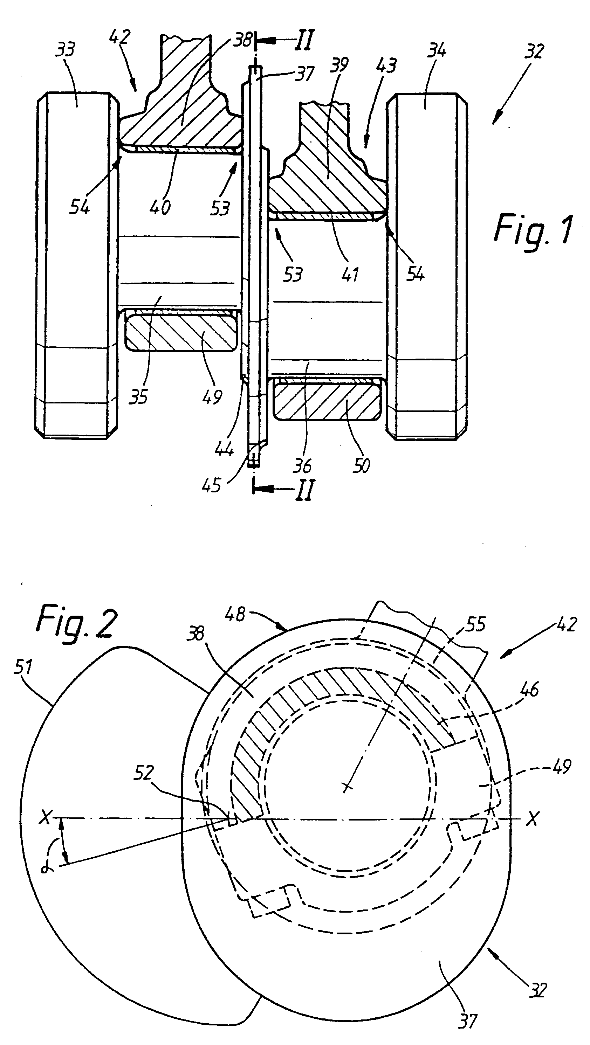

Figur 1 zeigt eine Kröpfung 32 einer in einem V-Motor eingesetzten Kurbelwelle, zwischen deren beider Kurbelwangen 33 und 34 zwei um ca. 30° zueinander versetzte Hubzapfen 35 und 36 angeordnet sind. Da der Hubzapfenversatz hier so groß gewählt ist, daß Pleuelstangen mit gegeneinandergeführten Axialanlaufflächen und schmalen Lagerdeckeln bei bestimmten Kurbelstellungen aus der gemeinsamen Axialanlaufüberdeckung austauchen, dort also axial nicht mehr ausreichend durch die benachbarten Pleuel geführt werden können, ist zwischen den beiden Hubzapfen 35 und 36 eine schmale Zwischenwange 37 vorgesehen, die als Axialanlauf für je ein Pleuelauge 38 bzw. 39 eines auf jedem Hubzapfen 35 bzw. 36 über eine Lagerschale 40 bzw. 41 drehbar gelagerten Pleuels 42 bzw. 43 dient. Auf der jeweiligen der Zwischenwange 37 abgewandtenSeite sind die beiden Pleuelaugen 38 und 39 durch die beiden Kurbelwangen 33 und 34 axial geführt. Im Axialanlaufbereich ist die Zwischenwange 37 beidseitig mit je einem Axialanlaufbund 44 bzw. 45 versehen, so daß bei der Fertigung der Kurbelwelle bzw. der Zwischenwange 37 nur deren Axialanlaufbünde 44 und 45 feinstzubearbeiten sind.

Figur 2 zeigt die Kröpfung 32 der Figur 1 einer entlang der Linie II-II geschnittenen Darstellung, wobei der Übersichtlichkeit wegen auf die Schraffur der geschnittenen Zwischenwangen 37 verzichtet wurde. Die Zwischenwange 37 ist nun so dimensioniert, daß die an dem Pleuelauge 38 angeordnete Axialanlauffläche 46 (schraffierte Fläche) in keiner Kurbelstellung aus der Projektionskontur 48 der Zwischenwange 37 austauchen kann, d.h. also, die Schnittfläche aus der Axialanlauffläche (46) des jeweiligen Pleuels (42 bzw. 43) und der Zwischenwangenprojektionsfläche 55 in jeder Kurbelstellung gleich der Axialanlauffläche 46 ist.

Die Axialführung des Pleuels 42 muß aufgrund der Ausgestaltung der Zwischenwange 37 nur über den pleuelschaftseitigen Teil des Pleuelauges 38 erfolgen. Die Breite des Lagerdeckels 49 ist dabei um die Hälfte des aus dem Gewicht zu errechnenden Betrages reduziert, um den der rotierende Anteil einer Kurbelkröpfung 32 durch Zufügang der Zwischenwange 37 zugenommen hat (siehe auch Figur 1).

Der Einfachheit halber zeigt die Figur 2 nur die linke Seite der Kröpfung 32 bzw. den Axialanlauf des Pleuels 42. Selbstverständlich gilt das hierzu Gesagte auch für den Axialanlauf des Pleuels 43.

Zum Massenausgleich an beiden Kurbelwangen 33 bzw. 34 angeordnete Gegengewichte 51 und um die Grundzapfenlängsachse 52 mit gleichem Verdrehwinkel $\alpha$ zur Hauptkröpfungsrichtung X - X gedreht angeordnet (Fertigungserleichterung).

Um die Pleuellagerschalen 40 und 41 in Richtung der Zwischenwange 37 weiter verbreitern zu können, sind die Radien in den Zwischenwangenübergängen 53 kleiner ausgebildet als diejenigen der Kurbelwangenübergänge 54 (s. Figur 1).

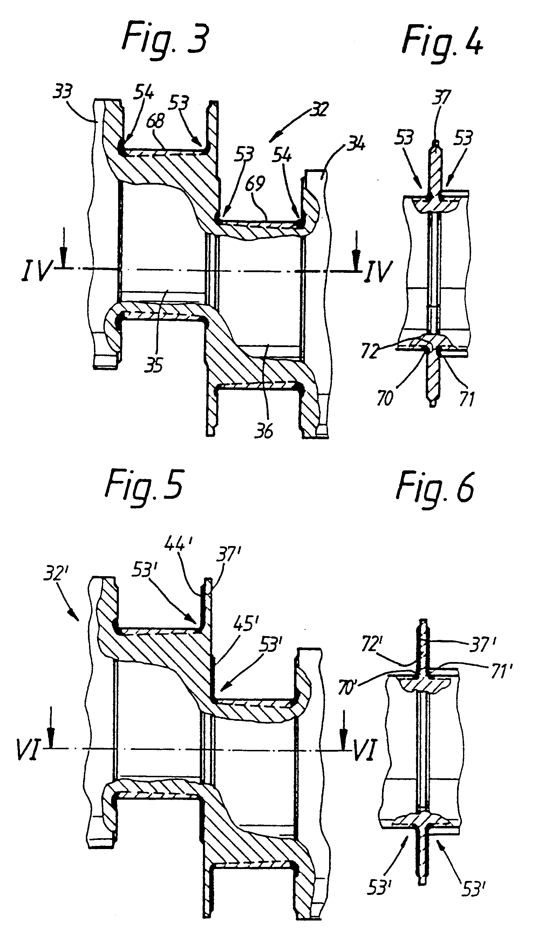

Aus der Figur 3, die eine längsgeschnittene Darstellung der Kurbelkröpfung 32 der Figur 1 zeigt, ist ersichtlich, daß sowohl die Übergangsradien 54 zu den Kurbelwangen 33 bzw. 34 als auch die 53 zu der Zwischenwange 37 einer umlaufenden Induktivradienhärtung unterzogen sind, wobei die Einhärtetiefe in den Übergängen 54 zu den Kurbelwangen 33 bzw. 34 aufgrund der an diesen Stellen höheren Beanspruchung tiefer ausgeführt ist als in den Zwischenwangenübergängen 53. Entsprechend hierzu weisen die beiden Hubzapfen 35 und 36 eine gehärtete Oberfläche 68 und 69 auf, deren Einhärtetiefe sich ausgehend von den Kurbelwangenübergängen 54 bis hin zu den Zwischenwangenübergängen 53 kontinuierlich verringert.

Figur 4 zeigt einen Ausschnitt einer Draufsicht auf eine in Höhe der gedachten Radienverschneidung (Figur 3, Linie IV-IV) längsgeschnittene Kröpfung. In dieser Darstellung ist zu sehen, daß die Einhärtetiefe an den Übergangsradien 53 zur Zwischenwange 37 jedoch nur so tief gewählt ist, daß zwischen den ausgehärteten Zonen 70 und 71 noch eine weiche nicht ausgehärtete Zone 72 verbleibt.

Eine weitere vorteilhafte Ausgestaltung zeigt die Figur 5 mit einer Kröpfung 32′, die der der Figur 3 entspricht, nur daß hierbei die Induktivhärtung im Zwischenwangenbereich 53′ nicht nur auf die Übergangsradien beschränkt bleibt sondern sich über die gesamten Axialanlaufbünde 44′ und 45′ erstreckt. Durch diese Maßnahme wird im gefährdeten Bereich, nämlich im freien Teil der Zwischenwange 37′ im Übergangsgefüge vom gehärteten zum nicht gehärteten Werkstoff, einer eventuellen Entstehung von Umfangshärterissen vorgebeugt.

Auch bei dieser Ausführungsform verbleibt im gedachten Verschneidungsbereich zwischen den beidseitigen Härtezonen 70′ und 71′ eine weiche, nicht ausgehärtete Zone 72′ (siehe Figur 6 analog zu Figur 4), wobei zudem die Einhärtetiefe der Axialanlaufbünde 44′ bzw. 45′ geringer ist als die Breite der Zwischenwange 37′.

## Patentansprüche

1. Kurbeltrieb einer Brennkraftmaschine der V-Bauart mit einer Kurbelwelle, die zwischen jeweils zwei Kurbelwangen (33, 34) zwei zueinander versetzt angeordnete Hubzapfen (35, 36) aufweist, auf denen je ein Pleuel mit seinem großen Pleuelauge (38, 39) gelagert ist, wobei jedes Pleuel auf einer ersten Seite durch eine Kurbelwange (33, 34) und auf der zweiten Seite über eine am pleuelschaftseitigen Teil des großen Pleuelauges (38, 39) angeordnete Axialanlauffläche an einer die beiden Hubzapfen (35, 36) miteinander verbindenden, nicht tragenden Zwischenwange (37), deren Projektionskontur die der beiden Hubzapfen (35, 36) umhüllt, axial geführt ist, **dadurch gekennzeichnet,** daß die Zwischenwange (37) beidseitig je einen Axialanlaufbund (44 bzw. 45) aufweist und daß die Zwischenwange (37) derart vergrößert ausgebildet ist, daß die Schnittfläche aus der Projektion der Axialanlauffläche (46) des jeweiligen Pleuels und der Projektion der Zwischenwange (37) auf eine senkrecht zur Kurbelwellenachse liegende Ebene gleich der Projektion der Axialanlauffläche (46) selbst ist.

2. Kurbeltrieb nach Anspruch 1, **dadurch gekennzeichnet,** daß die Breite der Lagerdeckel (49 und 50) zusammen um den aus dem Gewicht zu errechnenden Betrag reduziert ist, um den der rotierende Anteil der jeweiligen Kurbelkröpfung (32) durch Zufügung der Zwischenwange (37) zugenommen hat.

3. Kurbeltrieb nach Anspruch 1 oder 2,
**dadurch gekennzeichnet,**
daß die kurbelwangenseitigen Hubzapfenübergangsradien (54) größer ausgebildet sind als die zwischenwangenseitigen (53).

4. Kurbeltrieb nach einem der Ansprüche 1 bis 3,
**dadurch gekennzeichnet,**
daß die Übergangsradien derart induktiv umfangsgehärtet sind, daß die Einhärtetiefe in den Kurbelwangenübergängen (54) größer ist als die in den Zwischenwangenübergängen (53).

5. Kurbeltrieb nach Anspruch 4,
**dadurch gekennzeichnet,**
daß die Hubzapfen (35 und 36) eine Oberflächenhärtung (68 und 69) aufweisen, deren Einhärtetiefe sich ausgehend von den Kurbelwangenübergängen (54) bis hin zu den Zwischenwangenübergängen (53) kontinuierlich verringert.

6. Kurbeltrieb nach Anspruch 4 oder 5,
**dadurch gekennzeichnet,**
daß sich die zwischenwangenseitige Umfangshärtung auf die gesamte Oberfläche der Axialanlaufbunde (44′ bzw. 45′) erstreckt, wobei die Einhärtetiefe der Axialanlaufbunde (44′ bzw. 45′) geringer ist, als die Breite der Zwischenwange (37′).

7. Kurbeltrieb nach einem der Ansprüche 4 bis 6,
**dadurch gekennzeichnet,**
daß die Einhärtetiefe im Zwischenwangenübergang (53 oder 53′) derart bemessen ist, daß in Höhe der gedachten Radienverschneidung eine schmale nicht ausgehärtete Zone (72 oder 72′) verbleibt.

**Claims**

1. Crank gear of an internal combustion engine of V-type construction with a crankshaft which has between two crank webs (33, 34) respectively two crank pins (35, 36) offset relative to each other, on which one connecting rod respectively is mounted with its big eye (38, 39), each connecting rod being axially guided on one first side by means of a crank web (33, 34), and on the second side by means of an axial stop face mounted on the part of the big connecting rod eye (38, 39) on the connecting rod side on a non-supporting intermediate web (37) connecting the two crank pins (35, 36), the projection outline of which intermediate web (37) encompasses the two crank pins (35, 36), characterized in that the intermediate web (37) has one axial stop collar (44 or 45) respectively on each side, and in that the intermediate web (37) is constructed in enlarged fashion in such a manner that the intersection surface of the projection of the axial stop face (46) of the respective connecting rod and of the projection of the intermediate web (37) on a plane situated perpendicularly to the axis of the crankshaft is identical with the projection of the axial stop face (46) itself.

2. Crank gear according to claim 1, characterized in that the width of the bearing covers (49 and 50) together is reduced by the amount to be calculated from the width, by which the rotary part of the respective bend (32) of the crankshaft has been increased by the addition of the intermediate web (37).

3. Crank gear according to either claim 1 or 2, characterized in that the crank pin transition radii (54) at the crank webs are designed to be greater than at the intermediate web sides (53).

4. Crank gear according to one of claims 1 to 3, characterized in that the transition radii are inductively circumferentially hardened in such a manner that the hardness penetration depth in the crank web transitions (54) is greater than in the intermediate web transitions.

5. Crank gear according to claim 4, characterized in that the crank pins (35 and 36) have a surface hardening (68 and 69) the penetration depth of which decreases starting from the crank web transitions (54) in continuous manner as far as the intermediate web transitions (53).

6. Crank gear according to either claim 4 or 5, characterized in that the circumferential hardening on the intermediate web side extends over the entire surface of the axial stop collars (44' or 45'), the depth of penetration of hardness of the axial stop collars (44' or 45') being smaller than the width of the intermediate webs (37').

7. Crank gear according to one of claims 4 to 6, characterized in that the hardness penetration depth in the intermediate web transition (53 or 53') is such that at the level of the imaginary radius intersection a narrow unhardened area (72 or 72') remains.

## Revendications

1. Mécanisme d'embiellage d'un moteur à combustion interne en V, avec un vilebrequin qui présente, chaque fois entre deux flasques (33, 34), deux manetons (35, 36) qui sont disposés décalés l'un par rapport à l'autre et sur chacun desquels une bielle est montée par son oeil de tête de bielle (38, 39), chaque bielle étant guidée axialement sur un premier côté par un flasque de vilebrequin (33, 34) et, sur le second côté, par l'intermédiaire d'une face de portée axiale disposée sur la partie côté corps de bielle de l'oeil de tête de bielle (38, 39), contre un flasque intermédiaire non porteur (37), qui relie entre eux les deux manetons (35, 36) et dont le contour de projection enveloppe celui des deux manetons (35, 36), caractérisé en ce que le flasque intermédiaire (37) présente de chaque côté un collet de portée axiale respectif (44 ou 45), et en ce que le flasque intermédiaire (37) est agrandi de telle sorte que la face d'intersection de la projection de la face de portée axiale (46) de la bielle respective et de la projection du flasque intermédiaire (37) sur un plan orthogonal à l'axe du vilebrequin soit identique à la projection de la face de portée axiale (46) proprement dite.

2. Mécanisme d'embiellage selon la revendication 1, caractérisé en ce que la largeur conjointe des chapeaux de paliers (49 et 50) est réduite du montant, à calculer par rapport au poids, dont la partie rotative du coude de vilebrequin respectif (32) a augmenté par adjonction du flasque intermédiaire (37).

3. Mécanisme d'embiellage selon la revendication 1 ou 2, caractérisé en ce que les rayons de transition des manetons côté flasques de vilebrequin (54) sont plus grands que ceux côté flasque intermédiaire (53).

4. Mécanisme d'embiellage selon l'une des revendications 1 à 3, caractérisé en ce que les rayons de transition sont trempés inductivement sur leur circonférence de telle sorte que la profondeur de trempe soit plus grande dans les transitions de flasques de vilebrequin (54) que dans les transitions de flasque intermédiaire (53).

5. Mécanisme d'embiellage selon la revendication 4, caractérisé en ce que les manetons (35 et 36) présentent une trempe superficielle (68 et 69) dont la profondeur de pénétration diminue en continu depuis les transitions de flasques de vilebrequin (54) jusqu'aux transitions de flasque intermédiaire (53).

6. Mécanisme d'embiellage selon la revendication 4 ou 5, caractérisé en ce que la trempe circonférentielle côté flasque intermédiaire s'étend sur toute la surface des collets de portée axiale (44' ou 45'), la profondeur de trempe des collets de portée axiale (44' ou 45') étant inférieure à la largeur du flasque intermédiaire (37').

7. Mécanisme d'embiellage selon l'une des revendications 4 à 6, caractérisé en ce que la profondeur de trempe dans la transition de flasque intermédiaire (53 ou 53') est dimensionnée de telle sorte qu'une étroite zone non trempée (72 ou 72') reste présente à hauteur de l'intersection imaginaire des rayons.

Fig. 1

Fig. 2

6

Fig. 3

Fig. 4

Fig. 5

Fig. 6